# EUROPEAN PATENT SPECIFICATION

(11) **EP 4 039 513 B1**
(45) Date of publication and mention of the grant of the patent: **29.01.2025**
(21) Application number: 22155653.3
(22) Date of filing: 08.02.2022
(51) Int. Cl.: B60H 1/00, B60H 1/32

(54) **UNIFIED COOLING UNIT WITH MODULAR STRUCTURE**
EINHEITLICHE KÜHLEINHEIT MIT MODULARER STRUKTUR
UNITÉ DE REFROIDISSEMENT UNIFIÉE À STRUCTURE MODULAIRE

(30) Priority: 09.02.2021 ES 202100052 U; 03.02.2022 ES 202230169 U
(43) Date of publication of application: 10.08.2022
(73) Proprietor: Courage Technologies S.L., 46520 Puerto de Sagunto Valencia (ES)
(72) Inventor: CLEMENTE ROIG, JUAN LUIS, 46117 Bétera (ES); CLIMENT LOPEZ, RUBEN, 46119 Náquera (ES); MAGRANER BENEDICTO, JUAN JOSE, 46021 Valencia (ES); ROIG BAYARRI, CARMEN, 46015 Valencia (ES)
(74) Representative: Soler Lerma, Santiago

(56) References cited:
- EP-A1- 3 276 286
- US-A- 4 172 493
- US-A1- 2019 214 691
- US-B1- 7 614 242

## Description

The invention, as its name suggests, refers to a cooling unit, the main elements of which are grouped into a block, close to each other, supported by a modular structure that enables the housing of the batteries, the condenser, the compressor and the battery and the compressor control elements, this structure being light and suitable for fixing to the body of a vehicle, all in a balanced manner without compromising its stability and with easy access to each of the components of the cooling unit.

In this way, an autonomous, manageable and versatile unit is achieved, that is also environmentally improved.

The technical sector to which it belongs is that of cooling systems for transportation vehicles.

### BACKGROUND

The transportation of perishable goods requires vehicle cooling systems and equipment that guarantee the optimal conditions of the products.

These pieces of equipment are usually driven by the vehicle's engine, which has the drawback that the vehicle must be running for the cooling unit to work. On long journeys, drivers' needs for rest require downtimes, during which the cooling unit needs to continue running and, during last-mile deliveries, the cooling unit needs to be kept running during delivery vehicle downtimes, during times involving home deliveries.

A possible solution for the cooling unit to keep running during vehicle stops is to incorporate an additional motor independent of the vehicle's engine. However, this adds considerable weight to the equipment, in addition to increasing its price, as well as the extra polluting effects that this option has compared with other options.

Other equipment is powered by external batteries, so that the cooling unit can be kept running whilst the vehicle is stationary. The batteries and their recharging systems are located in different parts of the vehicle, making it difficult to install, maintain, diagnose or repair them.

The assembly of these motors varies according to the vehicle, being, in some of them, a task that entails a significant investment of time and resources, in addition to other associated costs, such as specific tools or operations, reworking or the disposal of new parts supplied by the vehicle manufacturer.

We also find, amongst the patent literature, some documents referring to cooling systems that try to solve said problems.

Thus, for example, patent MX2013006380 refers to an autonomous cooling element that includes batteries, arranged in certain parts of the vehicle, as well as different recharging systems for said batteries, such as solar power.

Patent WO2016/196488 refers to a system to increase the autonomy of a battery cooling system, also including the possibility of recharging by means of solar power. If

Document EP 3276286A1 shows a further relevant transport refrigeration unit comprising a battery.

The proposed invention, albeit in the field of vehicle cooling systems, focuses on other objectives, all as specified below.

### DESCRIPTION OF THE INVENTION

The proposed invention is defined in claim 1 and has, as its objective:
A versatile refrigeration system in which the cooling unit -batteries, compressor, condenser and control electronics- are grouped into a compact modular chest and the evaporators can be distributed inside the vehicle box, depending on the needs of different cooling areas.

The objective of this arrangement is to easily integrate it into the vehicle, given that the pre-assembly can be carried out at the garage and it is quickly installed in the vehicle, avoiding the vehicle being inoperative for several days.

On the other hand, by grouping the different components, the length of the connections between them is shortened, reducing both the cost and the weight of the connection pipes, reducing the amount of gas needed in the circuit, so that, in the event of a leak, the environmental consequences are minor.

The proposed unified cooling unit also facilitates repair operations for two reasons. Firstly, because the layout of each of the components within the structure allows easy access. On the other hand, in the event of a severe fault, the grouped unit can be disassembled and replaced or, in the event of a fault that affects a module, said module can be disassembled and replaced in such a way that the times during which the vehicle is inoperative are reduced.

The fact of being unified avoids having to access different parts of the vehicle to verify the operation of one component or another, or to replace an element.

Another advantage is that, as it comes pre-assembled and unified, the number of parts, connections and bolts is reduced, thus reducing the risk of errors and avoiding intervention in different parts of the vehicle.

Another objective of the invention is that any eventuality can be quickly detected and repaired, which is achieved by the cooling unit being unified and visible.

In addition to reducing the extension of the connections between the elements of the cooling unit located in the structure, given that it is located on the cabin, the extension of the connections between the cooling unit and the user control interface or with the battery-charging elements, solar panels, power generators or mains socket, amongst others, is shortened.

The proposed cooling unit comprises the following:
A) A chest that, in turn, includes:
   - A modular structure suitable for housing and fixing, in its interior, multiple components amongst them;
      ▪ A condensing unit.
      ▪ Housed batteries housed, preferably centred, arranged in the rear part of the structure so that their weight influences the unit and the weight distribution per axle of the vehicle as little as possible.
      ▪ A compressor located on one side, in a specific hole. The compressor is of a variable speed and includes shock absorbers, minimising the transmission of noise and vibrations to the remaining elements and to the structure. The compressor is connected to the rest of the equipment through flexible tubing, thus decoupling possible vibrations with the rest of the system.
      ▪ An electronic compressor management unit preferably housed in the same compartment as the compressor.
      ▪ A power pack for managing the batteries, preferably housed in a side hole adjacent the hole for the batteries.
      ▪ A series of connections between the different components
B) One or more evaporator units in connection with the chest. The evaporator unit or units are arranged inside the vehicle body, in the desired place and with the desired orientation, with the ability to generate different temperature zones. The machining required in the body of the vehicle for the connections between the chest and the evaporator units is limited to allowing the passage of said connections; therefore, a hole that allows the passage of its section is sufficient.
C) External connections:
   - Connection with the control interface arranged in the cabin and that allows the user to control the cooling unit.
   - External connection for recharging the batteries, this connection being able to come from any recharging system, be it generator, solar panel, the vehicle's own engine battery, mains or any other means.

The structure of the chest is modular, in such a way that the various components can be pre-assembled in their corresponding module and these modules can be assembled together at a later time, allowing for simultaneous construction, stocking of independent modules and, in case of breakdown, their replacement, accelerating repair times. The modules are preferably joined together by removable means such as screws, complementary geometries or any other means.

All the modules have holes with windows to the outside of the structure, permitting easy access to the interior and to the components they house.

Covering the structure is a casing that has practicable areas for access to each hole, preferably coinciding with the windows. Each specific area of the casing that can be moved or removed from its position, leaving access to the interior of the chest, will be referred to as practicable areas.

In a preferred execution, the casing comprises independent panels, attached to the structure by removable means. These panels can each have a different morphology, depending on the characteristics that are necessary to cover each area.

Also in a preferred execution, the distribution of the various components and modules is carried out as follows, taking, as a reference, the cooling unit seen from the front of the vehicle.

The main module, in a central position, comprises a transverse partition that divides it into two openings: one at the front and one at the back.

The 24v or 48v batteries are housed in the rear hole, near the vehicle body and in a central position, thus favouring the distribution of loads from the cooling unit and greater stability of the entire unit. The condensing unit is housed in the previous hole to facilitate air flow.

On one of the sides of this central module, preferably on the left, there is a side frame, anchored to the transverse partition, which delimits a hole, which we will refer to as the left hole, which houses the electrical elements for managing the batteries.

On the opposite side is the compressor module with a hole, which we will refer to as the right hole, in which the compressor, the shock absorbers and the electronic compressor running unit are housed, as well as the connections between them. The compressor is of 24v or 48v variable voltage and variable speed and is powered directly by the batteries

According to the invention as defined in claim 1, the structure comprises a series of windows that communicate with the outside through each of the openings;
- The rear hole features a top window for easy access to batteries.
- The anterior hole presents a diaphanous front-superior window.
- The left hole presents an open window on the left side of the chest.
- The right hole presents several windows: one at the front, one open on the right side of the chest and one at the top to facilitate access to the different refrigeration components

The components must be easily accessible from the outside once the closing panel has been moved or removed

For this, the elements, inside the hole that houses them can be accessed, implying that they are arranged close to an access window and without connections or devices interposed between each component and the outside, for which all the connections have been laid out by the internal part of the modules.

The central partition protects the batteries, contributes to stiffening the assembly by making the upper front window transparent and supports the anchoring of the side frame and collaborates in the anchoring of the compressor module.

In this way, a rigid, light assembly is achieved, with a minimal structure and with large windows that allow easy access to each component in the event of a breakdown.

In a possible execution, the structure can have a lower blind closure independent of the lower closure that each module or hole can have and a rear closure, which is also blind, but with recesses in some of its parts to lighten the entire unit.

For a better understanding of the invention, the following figures are provided.

### BRIEF DESCRIPTION OF THE FIGURES

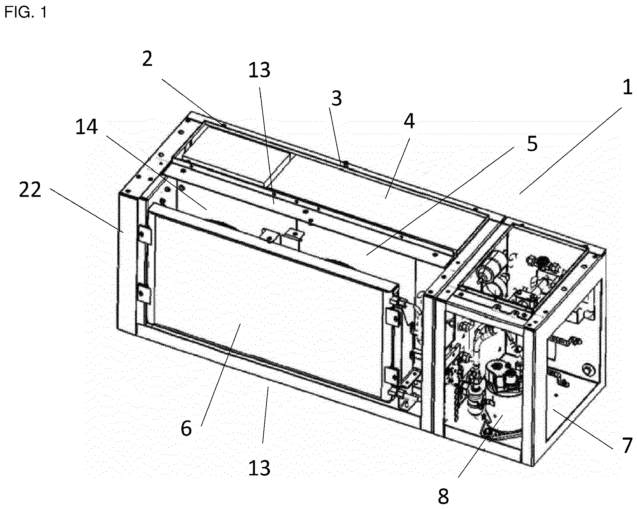

FIGURE 1 shows the cooling unit (1) without the outer casing, where the structure (2) can be seen that includes a central module (16) with the rear hole (3) where the batteries (4) are located, the previous hole (5) where the condenser (6) is located, the module with the right hole (7) where the compressor (8) is located together with other electronic elements for the running thereof and a frame (22) that delimits a left hole where the electrical elements for running the batteries are located.
   The structure comprises a transverse partition (13) that divides the central module into a front hole and a rear hole and allows the upper front window (14) of the front module to be diaphanous, that is, that no element obstructs or crosses it.

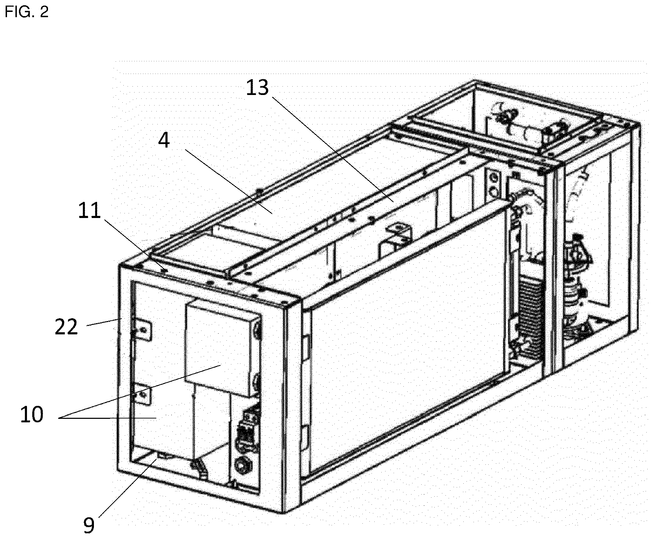

FIGURE 2 shows the cooling unit without the outer casing, from another perspective, where the left hole (9) and the frame (22) that delimit it and that is anchored to the transverse partition (13) can be seen in greater detail. The elements for the running (10) of the batteries (4) can also be seen.
   Anchoring elements (11) for fixing the removable panels can also be seen.

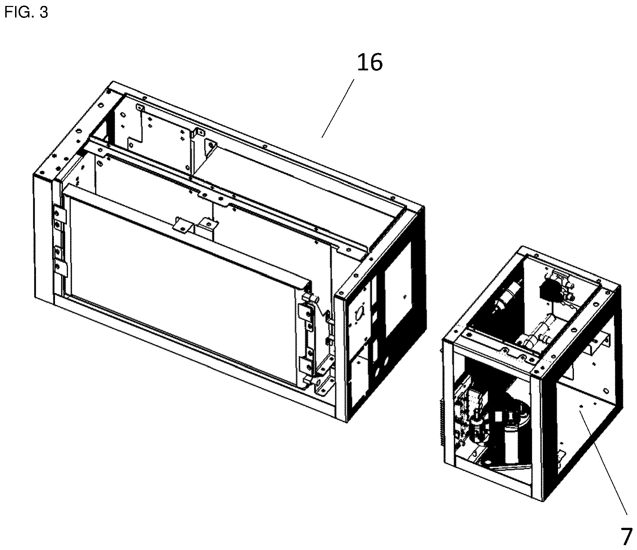

FIGURE 3 shows an exploded view of the central module (16) and the module with the right hole (7).

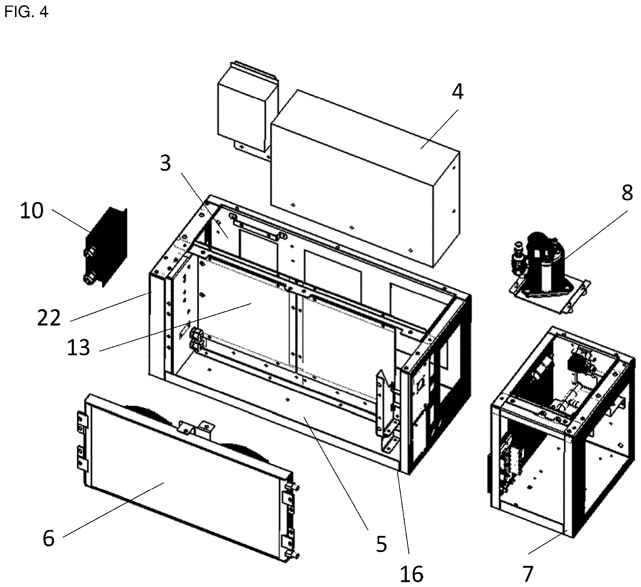

FIGURE 4 shows an exploded view of the separate components and elements of the unit, thus we can see the central module (16) with a rear hole (3), a front hole (5) and a transverse partition (13), the frame (22) that delimits the left hole and the right hole module (7). All the openings have windows to the outside and the different modules are joined together by removable means. The batteries (4), the condenser (6), the compressor (8), the electronic elements for running the compressor, the electric elements for managing the batteries (10) can all be seen, all of which are housed in the structure.

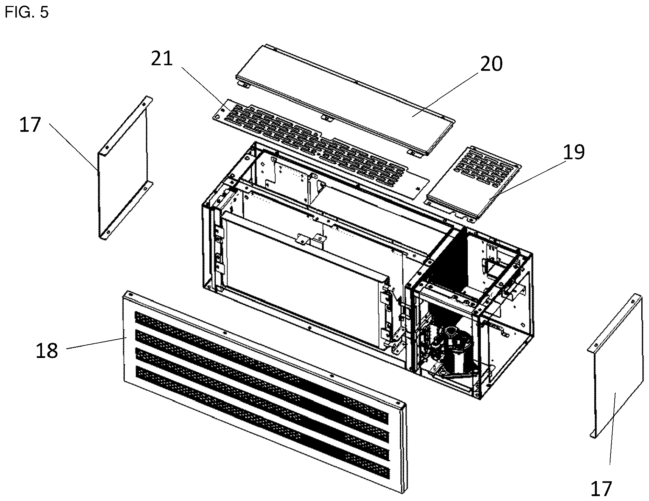

FIGURE 5 shows an exploded view of the panels covering the structure and comprising the casing, some of which are perforated. Thus we see the side panels (17) that cover the side windows of the left and right holes, the front panel (18) that covers the entire front part of the structure, the upper right panel (19) that covers the upper right hole, the rear panel (20) and the front panel (21), both upper panels.

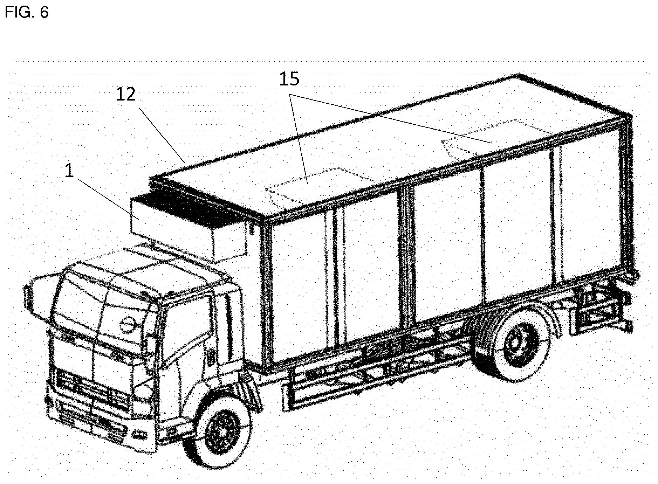

FIGURE 6 shows the cooling unit (1) assembled on a vehicle (12) where the evaporators (15) arranged inside the body of the lorry can also be seen, generating, in this case, two separate cooling zones.

### DESCRIPTION OF A MODE FOR CARRYING OUT THE INVENTION

A way of carrying out the invention according to claim 1 is described below, which is neither unique nor limiting, but merely explanatory.

The unified cooling unit, according to the proposed invention, comprises:
a modular structure (2) that supports the components, namely, the condenser (6), batteries (4), elements (10) for running the batteries, compressor (8), electronic elements for running the compressor and the connections between them.

For this, the structure has a central module that includes the rear hole (3) where the batteries (4) are located in a central manner and the front hole (5) where the condenser (6) is located. This central module also has a transverse partition (13) that divides it into the front and rear holes and protects the batteries.

The structure also has a module with a right hole (7) where the compressor (8) is located along with other electronic elements for the running of the latter and a left hole (9) where the elements (10) for the running of the batteries are located.

The various modules and openings are joined together by screws, forming a prismatic block. The prismatic shape of the structure and modules facilitates its manufacturing based on profiles and market parts.

Each hole has windows to the outside and the structure, once assembled, has windows at least on its front, sides and top.

The chest is covered by a protective casing comprising multiple panels, each covering an area.

The side panels (17) cover the side windows of the left opening and the right opening, the front panel (18) covers the entire front part of the structure, the upper right panel (19) covers the upper right opening and the rear panels (20) and front (21), both upper panels, cover the upper part of the rear hole and the front hole, respectively.

These panels are attached to the structure by screws or fixing knobs, as they can be easily removed. The regular shape of the panels, rectangular or square, facilitates their construction, given that special moulds or complex machining are not required.

As each panel can be removed independently, only the hole where the component to be accessed is housed can be accessed, without the need to completely disassemble the casing, thus avoiding excessive work or exposing the rest of the modules or elements, the access to which is not necessary.

The fact that the casing is modular allows the use of different materials, thicknesses or different constructions for the panels, adapting each panel to its intended use and its function, some of which may be complete plates (17) and (20), others may have a groove (19) and (21) and others have holes with a grid (18).

The compressor (8), with double speed and variable voltage, includes shock absorbers on which it is assembled to prevent vibrations. Similarly and also to decouple possible vibrations, it is connected to the remaining elements via a flexible connection. This compressor is powered directly from the batteries, in this case, 24v.

The compressor (8) is located in the right hole (7) in an accessible housing.

A component is referred to being in an accessible housing when, between that component and the outside, once the corresponding panel has been removed, there is no piece or part of a piece or connection that could hinder its access.

The condenser (6) is arranged in the front hole (5) and in a housing that can be accessed from the upper front window (14).

The condenser is arranged close to the compressor (8) to shorten the length of the connections between them, reducing the amount of gas in the circuit, which results in a lower cost of parts, assembly and maintenance and, in the event of a leak, less environmental damage. The reduction in cooling gas in the circuit is facilitated by the use of a condenser coil with an aluminium microchannel configuration.

In the left hole (9) the elements (10) for the running of the batteries are arranged in a housing that can be accessed from the outer window of the left hole. This left hole is delimited by a frame (22) attached to the central partition (13).

The batteries (4), arranged in the rear compartment (3) in a housing that can be accessed from the upper window of the rear compartment, are located in a laterally centred position and as close as possible to the wall of the vehicle body, thus facilitating the distribution of loads and the behaviour of forces of the assembly.

As has been stated, all the elements are arranged in such a way that they are easy to access and the structure has windows of a sufficient size to allow the removal of each element without the need to disassemble the assembly, all without diminishing the solidity and resistance of the structure that is also lightweight.

All modules and openings have a rectangular prism shape with windows on their outer sides. The set formed by the union of all of the modules and holes forms a rectangular prism.

The cooling unit presents a series of external connections that include the following:
- Connection with the evaporator unit or units that are arranged inside the vehicle box. The connection with the evaporator units is made via flexible tubing, facilitating installation and minimising the possibility of leaks.
- Connection with the control interface arranged in the cabin and that allows the user to control the cooling unit. From the electrical interface area of the unit and electronic control, the only electrical interface with the driver's cabin is routed with a communication cable between the electrical control of the cabin and the man-machine interface, usually assembled in the area of the vehicle's dashboard.
   - External connection for recharging the batteries, this connection being able to come from any recharging system, such as:
   - external connection of solar panels: coming from the roof of the vehicle, where the solar panels are located, therefore routing is short and simple;
   - external connection to the mains; an interface is prepared, usually on one side of the vehicle, to be able to connect to the mains;
   - engine battery, through a cable connected from the engine battery to the electrical recharging control module in the unit.

## Claims

1. UNIFIED COOLING UNIT WITH MODULAR STRUCTURE suitable for installation in a vehicle attached to the wall of its box in a chest above the cabin, comprising a structure suitable for housing the batteries (4) the condenser (6) the compressor (8) the compressor management electronics and the battery management electronics (10), and **characterised in that** said structure is compact and houses, in addition to the batteries (4), the condenser (6), the compressor (8), the electronic compressor management elements and the electrical battery management elements, all the connections between all the aforementioned elements, all of which are arranged in an accessible manner and wherein said structure is modular and comprises a module (16) with a rear hole (3) housing the batteries in a central position that distributes the loads giving stability to the whole and a front hole (5) with the condenser unit and a transverse partition (13) between them protecting the batteries, on the sides of this module (16), seen from the front of the vehicle, there is a left hole (9) and a module with a right hole (7); all of the modules have windows to the outside and are joined together by removable means. This structure is enclosed by a casing with a practicable area for each hole of each module and comprises connections to at least one evaporator (15).
And wherein the module (16) that comprising batteries and condenser also comprises a diaphanous front top window (14).

2. UNIFIED COOLING UNIT WITH MODULAR STRUCTURE according to claim 1, **characterised by** the compressor (8) and the electronic elements for running the compressor in the right hole (7) and the electric elements for running the batteries (6) in the left hole (9).

3. UNIFIED COOLING UNIT WITH MODULAR STRUCTURE according to claim 1, **characterised by** the fact that the casing includes removable closing panels for the windows.

4. UNIFIED COOLING UNIT WITH MODULAR STRUCTURE according to claim 1, **characterised by** the fact that the structure has the shape of a rectangular prism and each of the modules, in turn, has the shape of a rectangular prism.

5. UNIFIED COOLING UNIT WITH MODULAR STRUCTURE according to claim 1, **characterised by** the fact that the left opening (9) is delimited by a window (22) anchored to the perimeter wall (13).

6. UNIFIED COOLING UNIT WITH MODULAR STRUCTURE according to claim 1, **characterised by** the fact that the compressor has a variable speed and variable voltage.

7. UNIFIED COOLING UNIT WITH MODULAR STRUCTURE according to claim 1, **characterised by** the fact that it also includes an external connection for recharging the batteries.

8. UNIFIED COOLING UNIT WITH MODULAR STRUCTURE according to claim 1, **characterised by** the fact that it also includes an external connection with the control interface arranged in the cabin.

## Patentansprüche

1. EINHEITLICHE KÜHLEINHEIT MIT MODULARER STRUKTUR, die für den Einbau in ein Fahrzeug geeignet und an der Wand seines Kastenaufbaus in einem Gehäuse über der Fahrerkabine angebracht ist, umfassend eine Struktur, die für die Aufnahme der Batterien (4), des Kondensators (6), des Kompressors (8), der Kompressormanagement-Elektronik und der Batteriemanagement-Elektronik (10) geeignet ist, und **dadurch gekennzeichnet, dass** die Struktur kompakt ist und zusätzlich zu den Batterien (4), dem Kondensator (6), dem Kompressor (8), den elektronischen Kompressormanagement-Elementen und den elektrischen Batteriemanagement-Elementen alle Verbindungen zwischen allen oben genannten Elementen enthält, die alle zugänglich angeordnet sind und bei denen die Struktur modular ist, und ein Modul (16) mit einer hinteren Öffnung (3) umfasst, in der die Batterien in einer zentralen Position untergebracht sind, die die Lasten verteilt und dem Ganzen Stabilität verleiht, und mit einer vorderen Öffnung (5) mit der Kondensatoreinheit und einer Querwand (13) zwischen ihnen, die die Batterien schützt, an den Seiten dieses Moduls (16), von der Vorderseite des Fahrzeugs aus gesehen, befindet sich eine linke Öffnung (9) und ein Modul mit einer rechten Öffnung (7); alle Module haben Fenster nach außen und sind durch abnehmbare Elemente miteinander verbunden. Diese Struktur ist von einem Gehäuse mit einer nutzbaren Fläche für jede Öffnung jedes Moduls umgeben und umfasst Anschlüsse an mindestens einen Verdampfer (15).
Und wobei das Modul (16), das Batterien und Kondensator umfasst, auch ein durchsichtiges vorderes oberes Fenster (14) umfasst.

2. EINHEITLICHE KÜHLEINHEIT MIT MODULARER STRUKTUR nach Anspruch 1, **gekennzeichnet durch** den Kompressor (8) und die elektronischen Elemente zum Betreiben des Kompressors in der rechten Öffnung (7) und durch die elektrischen Elemente zum Betreiben der Batterien (6) in der linken Öffnung (9).

3. EINHEITLICHE KÜHLEINHEIT MIT MODULARER STRUKTUR nach Anspruch 1, **dadurch gekennzeichnet, dass** das Gehäuse abnehmbare Verschlussplatten für die Fenster umfasst.

4. EINHEITLICHE KÜHLEINHEIT MIT MODULARER STRUKTUR nach Anspruch 1, **dadurch gekennzeichnet, dass** die Struktur die Form eines rechteckigen Prismas hat und jedes der Module wiederum die Form eines rechteckigen Prismas hat.

5. EINHEITLICHE KÜHLEINHEIT MIT MODULARER STRUKTUR nach Anspruch 1, **dadurch gekennzeichnet, dass** die linke Öffnung (9) durch ein Fenster (22) begrenzt ist, das an der Umfangswand (13) angebracht ist.

6. EINHEITLICHE KÜHLEINHEIT MIT MODULARER STRUKTUR nach Anspruch 1, **dadurch gekennzeichnet, dass** der Kompressor eine variable Drehzahl und variable Spannung aufweist.

7. EINHEITLICHE KÜHLEINHEIT MIT MODULARER STRUKTUR nach Anspruch 1, **dadurch gekennzeichnet, dass** sie auch einen externen Anschluss zum Aufladen der Batterien umfasst.

8. EINHEITLICHE KÜHLEINHEIT MIT MODULARER STRUKTUR nach Anspruch 1, **dadurch gekennzeichnet, dass** sie auch eine externe Verbindung mit der in der Fahrerkabine angeordneten Steuerschnittstelle aufweist.

## Revendications

1. UNITÉ DE REFROIDISSEMENT UNIFIÉE À STRUCTURE MODULAIRE adaptée à une installation dans un véhicule fixé à la paroi de son boîtier dans un coffre au-dessus de la cabine, comprenant une structure conçue pour loger les batteries (4), le condenseur (6), le compresseur (8), l'électronique de gestion du compresseur et l'électronique de gestion de la batterie (10), et **caractérisée en ce que** ladite structure est compacte et loge, en plus des batteries (4), le condenseur (6), le compresseur (8), les éléments de gestion du compresseur électronique et les éléments de gestion de la batterie électrique, toutes les connexions entre tous les éléments susmentionnés, qui sont tous disposés de manière accessible et dans lesquels ladite structure est modulaire et comprend un module (16) avec un trou arrière (3) logeant les batteries dans une position centrale qui répartit les charges, donnant une stabilité à l'ensemble et un trou avant (5) avec l'unité de condenseur et une cloison transversale (13) entre eux protégeant les batteries, sur les côtés de ce module (16), vus de l'avant du véhicule, il y a un trou gauche (9) et un module avec un trou droit (7) ; tous les modules ont des fenêtres vers l'extérieur et sont reliés entre eux par des moyens amovibles. Cette structure est entourée d'un boîtier avec une zone praticable pour chaque trou de chaque module et comprend des connexions à au moins un évaporateur (15).
Et dans laquelle le module (16) qui comprend des batteries et un condensateur comprend également une fenêtre supérieure avant diaphane (14).

2. UNITÉ DE REFROIDISSEMENT UNIFIÉE À STRUCTURE MODULAIRE selon la revendication 1, **caractérisée par** le compresseur (8) et les éléments électroniques pour faire fonctionner le compresseur dans le trou droit (7) et les éléments électriques pour faire fonctionner les batteries (6) dans le trou gauche (9).

3. UNITÉ DE REFROIDISSEMENT UNIFIÉE À STRUCTURE MODULAIRE selon la revendication 1, **caractérisée par le fait que** le boîtier comprend des panneaux de fermeture amovibles pour les fenêtres.

4. UNITÉ DE REFROIDISSEMENT UNIFIÉE À STRUCTURE MODULAIRE selon la revendication 1, **caractérisée par le fait que** la structure a la forme d'un prisme rectangulaire et que chacun des modules, à son tour, a la forme d'un prisme rectangulaire.

5. UNITÉ DE REFROIDISSEMENT UNIFIÉE À STRUCTURE MODULAIRE selon la revendication 1, **caractérisée par le fait que** l'ouverture gauche (9) est délimitée par une fenêtre (22) ancrée à la paroi périphérique (13).

6. UNITÉ DE REFROIDISSEMENT UNIFIÉE À STRUCTURE MODULAIRE selon la revendication 1, **caractérisée par le fait que** le compresseur a une vitesse variable et une tension variable.

7. UNITÉ DE REFROIDISSEMENT UNIFIÉE À STRUCTURE MODULAIRE selon la revendication 1, **caractérisée par le fait qu'**elle comprend également une connexion externe pour recharger les batteries.

8. UNITÉ DE REFROIDISSEMENT UNIFIÉE À STRUCTURE MODULAIRE selon la revendication 1, **caractérisée par le fait qu'**elle comprend également une connexion externe avec l'interface de commande agencée dans la cabine.
